# DEMANDE DE BREVET EUROPEEN

(11) **EP 4 717 123 A1**
(43) Date of publication of application: **01.04.2026**
(21) Application number: 24810393.9
(22) Date of filing: 21.05.2024
(51) Int. Cl.: A47C 7/00

(54) **SHIELD DUSTPROOF STRUCTURE OF FLOOR SLIDE RAIL**

(30) Priority: 22.05.2023 CN 202321240943 U; 21.06.2023 CN 202321596429 U
(71) Applicant: Yanfeng International Automotive Technology Co., Ltd., Shanghai 201306 (CN)
(72) Inventor: TANG, Xun, Shanghai 201306 (CN)
(74) Representative: Colombo, Stefano Paolo
(86) International application number: PCT/CN2024/094487
(87) International publication number: WO 2024/240151

(57) **Abstract**

The present disclosure relates to a ground slide rail cover dust-proof structure, comprising a covering structure, characterized in that the covering structure is configured such that when a slide rail bracket passes through the covering structure, the covering structure is spread open by the passing of the slide rail bracket; when the slide rail bracket leaves, the covering structure returns to a closed state due to a restoring force. The covering structure of the present disclosure can realize a 100% closed state in the non-moving area, thereby achieving a dust-proof effect. The present disclosure has the advantages of low cost, platformization, and easy installation.

## Description

This disclosure is based on the applications with Chinese Application Nos. CN202321240943.2 (filing date: May 22, 2023) and CN202321596429.2 (filing date: June 21, 2023), and claims the priority thereof. The disclosed contents of the Chinese applications are incorporated herein in their entirety as part of the present disclosure.

### Technical Field

The present disclosure relates to the technical field of slide rails, in particular to seat slide rails, and specifically to a ground slide rail cover dust-proof structure.

### Background of Invention

Currently, a motor drives a lead screw-type long slide rail through a gearbox. A single motor is vertically arranged above the slide rail and installed between the upper slide rails. This results in the decorative strip needing to avoid the motor and the bracket, making it impossible to close. In addition, the existing decorative strips and rubber strips still have an opening at the center of the slide rail. This structure causes the lead screw to be directly exposed. Over time, foreign objects and dust fall and adhere to the lead screw. As the slide rail moves back and forth, these foreign objects and dust enter the gearbox and the raceway, damaging the worm gear in the gearbox and destroying the raceway. This causes the slide rail to have poor sound performance and vibration, and even jamming.

To address this issue, Chinese Invention Patent Application Publication No. CN113147526A discloses a dust-proof mechanism for automobile seat slide rails. It uses two left and right coil springs to tension the cloth, allowing the cloth to move (stretch and contract) together with the upper rail, so as to cover the lead screw and protect the lead screw from foreign objects falling from above. Its advantages are low space occupation, while its disadvantages include a large number of parts, complex installation, small coverage area, inability to protect the rail, and poor durability.

Chinese Utility Model Authorization Announcement No. CN217791727U discloses a zipper structure for preventing foreign objects in seat slide rails. The left and right cloths are fixed on the flanging of the lower rail, and the zipper fastener is fixed to the upper rail. The zipper opening moves synchronously with the upper rail, achieving 100% dust-proof effect in the area not passed by the upper rail. Its advantage is that it basically achieves full-area coverage, while its disadvantages are low durability, possible jamming of the zipper fastener, and high required precision for part matching.

### Summary of Invention

The technical problem to be solved by the present disclosure is to provide a ground slide rail cover dust-proof structure that is simple in structure, easy to manufacture and low in cost, aiming at the problems of poor durability, complex structure, high required precision for part matching (which increases cost) existing in the above-mentioned prior art. In addition, the ground slide rail cover dust-proof structure is high in durability
To achieve the above objective, the present disclosure proposes a ground slide rail cover dust-proof structure, which includes a covering structure, characterized in that the covering structure is configured such that when a slide rail bracket passes through the covering structure, the covering structure is spread open by the passing of the slide rail bracket; when the slide rail bracket leaves, the covering structure returns to a closed state due to a restoring force, thereby achieving a dust-proof effect.

In a preferred embodiment of the present disclosure, the covering structure is configured as a pair of rubber strips installed on the slide rail to cover the internal structure of the slide rail, wherein the opposite surfaces of the pair of rubber strips can be magnetically attracted to each other, while they can also be separated under an external force.

In a preferred embodiment of the present disclosure, the ground slide rail cover dust-proof structure further comprises a pair of decorative strips, wherein the pair of decorative strips are installed on the slide rail, wherein the pair of rubber strips are arranged between the pair of decorative strips.

In a preferred embodiment of the present disclosure, the decorative strips are snapped on the lower rail of the slide rail.

In a preferred embodiment of the present disclosure, the cross-section of the decorative strip is L-shaped or T-shaped, wherein the vertical side of the L-shape or T-shape is snapped on the lower rail of the slide rail, wherein the rubber strip is snapped on the horizontal side of the L-shape or T-shape.

In a preferred embodiment of the present disclosure, at least one first snap is provided on the vertical side of the L-shape or T-shape, wherein at least one first snap-fit opening is provided on the lower rail of the slide rail, wherein the first snap is snap-fitted in the first snap-fit opening.

In a preferred embodiment of the present disclosure, at least one second snap-fit opening is provided on the horizontal side of the L-shape or T-shape, wherein at least one second snap is provided on the rubber strip, wherein the second snap is snap-fitted in the second snap-fit opening.

In a preferred embodiment of the present disclosure, magnetic powder is filled in the rubber strips during their preparation to make the rubber strips magnetic; or wherein magnetic powder is coated on the opposite surfaces of the pair of rubber strips; or wherein magnetic sheets are attached to or embedded in the opposite surfaces of the pair of rubber strips.

In a preferred embodiment of the present disclosure, the ground slide rail cover dust-proof structure comprises a slide rail, wherein the covering structure is configured as a pair of connecting pieces, wherein the ends of the pair of connecting pieces that are away from each other are installed on the slide rail to cover the internal structure of the slide rail, wherein the opposite ends of the pair of connecting pieces can be magnetically attracted to each other, while they can also be separated under an external force.

In a preferred embodiment of the present disclosure, the ground slide rail cover dust-proof structure further comprises a pair of decorative strips, wherein the pair of decorative strips are installed on the slide rail, wherein the ends of the pair of connecting pieces that are away from each other are respectively installed on the pair of decorative strips and located below the pair of decorative strips.

In a preferred embodiment of the present disclosure, each of the pair of connecting pieces is L-shaped or T-shaped, wherein the vertical sides of the L-shaped or T-shaped connecting pieces are snapped on the lower rail of the slide rail, wherein the ends of the pair of connecting pieces that are away from each other are snapped on the horizontal sides of the L-shape or T-shape of the decorative strips.

In a preferred embodiment of the present disclosure, at least one third snap is provided at the ends of the pair of connecting pieces that are away from each other, wherein at least one third snap-fit opening is provided on the horizontal side of the L-shaped or T-shaped decorative strip, wherein the third snap is snap-fitted in the third snap-fit opening.

In a preferred embodiment of the present disclosure, magnetic powder is coated on the opposite ends of the pair of connecting pieces, or wherein magnetic sheets are attached to the opposite ends of the pair of connecting pieces, or wherein magnetic powder is filled in the connecting pieces during their manufacture.

In a preferred embodiment of the present disclosure, the connecting pieces are made of cloth, wherein the third snap is plastic snap formed on the cloth.

By adopting the above technical solution, the rubber strips or connecting pieces of the present disclosure are closed by magnetic attraction, which can realize a 100% closed state in the non-moving area, thereby achieving a dust-proof effect. The present disclosure has the advantages of low cost, platformization, and easy installation.

In a preferred embodiment of the present disclosure, the ground slide rail cover dust-proof structure comprises a slide rail and a first decorative strip and a second decorative strip installed on the slide rail, wherein the covering structure is configured as a first dust-proof cloth and a second dust-proof cloth which are overlapped and respectively installed on the first decorative strip and the second decorative strip, wherein the slide rail bracket in the slide rail moves back and forth between the first dust-proof cloth and the second dust-proof cloth.

In a preferred embodiment of the present disclosure, one edge of the first dust-proof cloth parallel to the length direction of the first decorative strip is snapped into the first decorative strip, wherein the other edge of the first dust-proof cloth parallel to the length direction of the first decorative strip is snapped into the second decorative strip, wherein one edge of the second dust-proof cloth parallel to the length direction of the second decorative strip is snapped into the second decorative strip, wherein the other edge of the second dust-proof cloth parallel to the length direction of the second decorative strip is snapped into the first decorative strip.

In a preferred embodiment of the present disclosure, the two corners of the other edge of the first dust-proof cloth parallel to the length direction of the first decorative strip are snapped into the first decorative strip, wherein the two corners of the other edge of the second dust-proof cloth parallel to the length direction of the first decorative strip are snapped into the second decorative strip.

In a preferred embodiment of the present disclosure, a first connecting part and a second connecting part are provided on the first decorative strip and the second decorative strip, wherein a first snaping slot and a second snaping slot are respectively provided on the two side surfaces of the first connecting part, wherein a third snaping slot and a fourth snaping slot are respectively provided on the two side surfaces of the second connecting part, wherein one edge of the first dust-proof cloth parallel to the length direction of the first decorative strip is snapped into the first snaping slot, wherein the other edge of the first dust-proof cloth parallel to the length direction of the first decorative strip is snapped into the third snaping slot, wherein one edge of the second dust-proof cloth parallel to the length direction of the second decorative strip is snapped into the fourth snaping slot, wherein the other edge of the second dust-proof cloth parallel to the length direction of the second decorative strip is snapped into the second snaping slot.

In a preferred embodiment of the present disclosure, the first snaping slot and the second snaping slot are symmetrically arranged on the two side surfaces of the first connecting part, wherein the third snaping slot and the fourth snaping slot are symmetrically arranged on the two side surfaces of the second connecting part.

In a preferred embodiment of the present disclosure, the first snaping slot and the second snaping slot are both L-shaped in the direction perpendicular to the length direction of the first decorative strip, wherein the third snaping slot and the fourth snaping slot are both L-shaped in the direction perpendicular to the length direction of the second decorative strip.

In a preferred embodiment of the present disclosure, one edge of the first dust-proof cloth parallel to the length direction of the first decorative strip is snapped into the first snaping slot through a first long snap, wherein one edge of the second dust-proof cloth parallel to the length direction of the second decorative strip is snapped into the fourth snaping slot through a second long snap.

In a preferred embodiment of the present disclosure, the two corners of the other edge of the first dust-proof cloth parallel to the length direction of the first decorative strip are snapped into the third snaping slot, wherein the two corners of the other edge of the second dust-proof cloth parallel to the length direction of the first decorative strip are snapped into the second snaping slot.

In a preferred embodiment of the present disclosure, the two corners of the other edge of the first dust-proof cloth parallel to the length direction of the first decorative strip are respectively snapped into the third snaping slot through two first short snaps, wherein the two corners of the other edge of the second dust-proof cloth parallel to the length direction of the second decorative strip are respectively snapped into the second snaping slot through two second short snaps.

In a preferred embodiment of the present disclosure, both the first dust-proof cloth and the second dust-proof cloth are elastic cloths, wherein at the position where the slide rail bracket leaves, the first dust-proof cloth and the second dust-proof cloth are closed by their own elasticity, so as to achieve the dust-proof purpose.

By adopting the above technical solution, the present disclosure can realize a 100% closed state in the non-moving area only by using two overlapped dust-proof cloths, thereby achieving a dust-proof effect. The present disclosure is convenient to install, occupies extremely small space, does not increase additional space, has no high precision requirements for materials, enhances the additional dust-proof effect, prevents foreign objects from adhering to the lead screw, and has excellent high-low temperature resistance and durability due to the use of cloth materials. In conclusion, the present disclosure has the advantages of low cost, platformization, and easy installation.

In a preferred embodiment of the present disclosure, the covering structure has non-working areas at both ends of the ground slide rail cover dust-proof structure and a working area between the non-working areas, wherein the slide rail bracket can slide within the range of the working area, wherein the length of the non-working area accounts for at least 5%, preferably at least 10%, particularly at least 15% of the total length of the covering structure.

### Brief Description of Drawings

Fig. 1 is an assembly schematic diagram of the lower rail, decorative strips and rubber strips in Embodiment 1 of the present disclosure.
Fig. 2 is a partial assembly schematic diagram of the lower rail, decorative strips and rubber strips in Embodiment 1 of the present disclosure.
Fig. 3 is an exploded schematic diagram of the ground slide rail cover dust-proof structure in Embodiment 1 of the present disclosure.
Fig. 4 is the first assembly schematic diagram of the decorative strips and rubber strips in Embodiment 1 of the present disclosure.
Fig. 5 is a structural schematic diagram of the pair of rubber strips in Embodiment 1 of the present disclosure.
Fig. 6 is a cross-sectional schematic diagram of the rubber strip in Embodiment 1 of the present disclosure.
Fig. 7 is the second assembly schematic diagram of the decorative strips and rubber strips in Embodiment 1 of the present disclosure.
Fig. 8 is an enlarged schematic diagram of part I in Fig. 7.
Fig. 9 is the third assembly schematic diagram of the decorative strips and rubber strips in Embodiment 1 of the present disclosure.
Fig. 10 is a schematic diagram of the ground slide rail cover dust-proof structure in Embodiment 1 of the present disclosure.
Fig. 11 is the fourth assembly schematic diagram of the decorative strips and rubber strips in Embodiment 1 of the present disclosure.
Fig. 12 is the fifth assembly schematic diagram of the decorative strips and rubber strips in Embodiment 1 of the present disclosure.
Fig. 13 is the sixth assembly schematic diagram of the decorative strips and rubber strips in Embodiment 1 of the present disclosure.

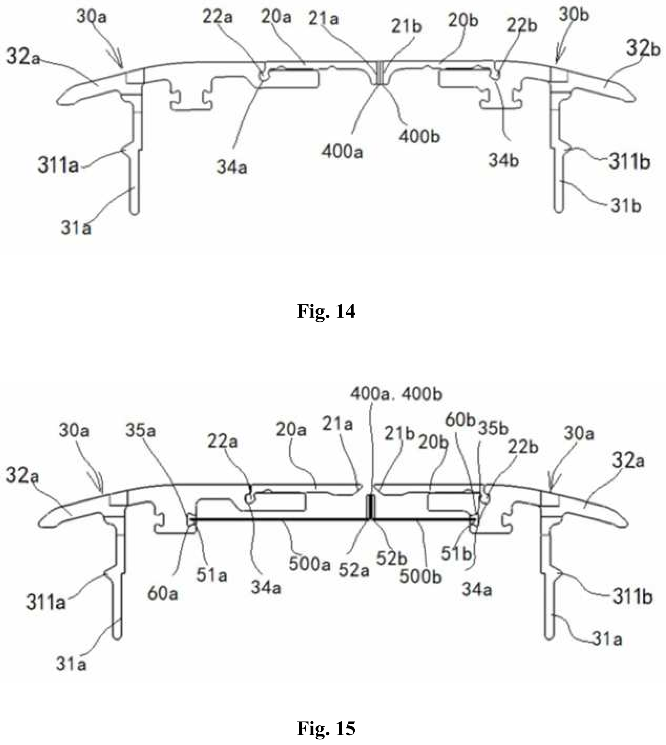

Fig. 14 is an assembly schematic diagram of the decorative strips and rubber strips in Embodiment 2 of the present disclosure.
Fig. 15 is an assembly schematic diagram of the decorative strips, rubber strips and cloth in Embodiment 3 of the present disclosure.
Fig. 16 is an appearance schematic diagram of the slide rail equipped with the ground slide rail cover dust-proof structure in Embodiment 4 of the present disclosure.
Fig. 17 is an assembly schematic diagram of the ground slide rail cover dust-proof structure in Embodiment 4 of the present disclosure.
Fig. 18 is a schematic diagram of the two dust-proof cloths in the initial state in Embodiment 4 of the present disclosure.
Fig. 19 is a structural schematic diagram of the short snap in Embodiment 4 of the present disclosure.
Fig. 20 is a structural schematic diagram of the long snap in Embodiment 4 of the present disclosure.
Fig. 21 is a schematic diagram showing the two dust-proof cloths snapped on the decorative strips through the long snaps and short snaps in Embodiment 4 of the present disclosure.
Fig. 22 is an assembly schematic diagram of the decorative strips and rubber strips in Embodiment 4 of the present disclosure.
Fig. 23 is a schematic diagram showing the assembly process of the dust-proof cloths and the decorative strips in Embodiment 4 of the present disclosure.
Fig. 24 is an assembly schematic diagram of the slide rail equipped with the ground slide rail cover dust-proof structure in Embodiment 4 of the present disclosure.
Fig. 25 is the first exploded schematic diagram of the ground slide rail cover dust-proof structure during the movement of the slide rail bracket in Embodiment 4 of the present disclosure, wherein the slide rail bracket is not shown for clarity.
Fig. 26 is a schematic diagram showing the overlap of the two dust-proof cloths during the movement of the slide rail bracket in Embodiment 4 of the present disclosure.
Fig. 27 is the second exploded schematic diagram of the ground slide rail cover dust-proof structure during the movement of the slide rail bracket in Embodiment 4 of the present disclosure, where the slide rail bracket is also not shown for clarity.
Fig. 28 is a schematic diagram showing the slide rail bracket operating between the two dust-proof cloths in Embodiment 4 of the present disclosure.
Fig. 29 is a schematic diagram showing the distribution of the working area and non-working areas of the covering structure of the ground slide rail cover dust-proof structure according to the present disclosure.

### Detailed Description of Drawings

The present disclosure will be described in detail below with reference to the accompanying drawings and specific embodiments.

The general inventive point of the present disclosure is to provide a covering structure, which is configured such that when the slide rail brackets 12, 22 pass through the covering structure, the covering structure is spread open by the passing of the slide rail brackets 12, 22; when the slide rail brackets leave, the covering structure returns to a closed state due to a restoring force, thereby achieving a dust-proof effect.

One of the sub-inventive points of the present disclosure is that the opposite surfaces 21a, 22a of a pair of rubber strips 20a, 20b used to cover the internal structure of the slide rail 10 can be magnetically attracted to each other, while they can also be separated under an external force. Thus, a 100% closed state in the non-moving area of the slide rail 10 can be realized, thereby achieving a dust-proof effect. The present disclosure has the advantages of low cost, platformization, and easy installation.

In one embodiment of the present disclosure, the present disclosure magnetizes the opposite surfaces 21a, 21b of a pair of rubber strips 20a, 20b, such that the pair of rubber strips 20a, 20b has a self-closing effect and provides a restoring force when the pair of rubber strips 20a, 20b recover their deformation, which is similar to the opening and closing state of a zipper.

When the slide rail bracket 12 passes through the pair of rubber strips 20a, 20b, the pair of rubber strips 20a, 20b are spread open by the passing of the slide rail bracket 12; when the slide rail bracket 12 leaves, the pair of rubber strips 20a, 20b rebound due to their own restoring force to a nearly horizontal state (approximately 15° to 20°), and then are forced to return to the horizontal closed state under the action of magnetic attraction, thereby achieving a dust-proof effect. Here, the restoring force is provided by the self-restoring force of the rubber strips and the additional magnetic attraction force.

Various specific implementations of the present disclosure will be described in detail below with reference to examples.

### Embodiment 1

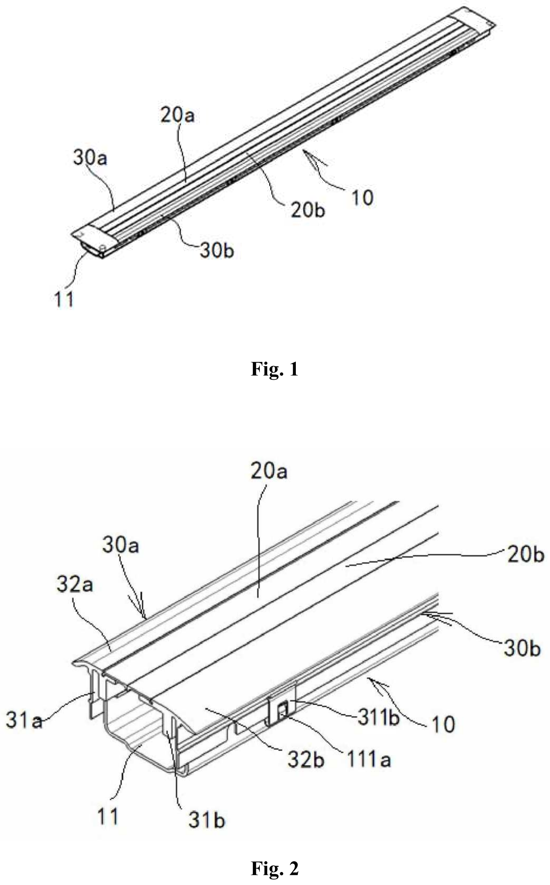

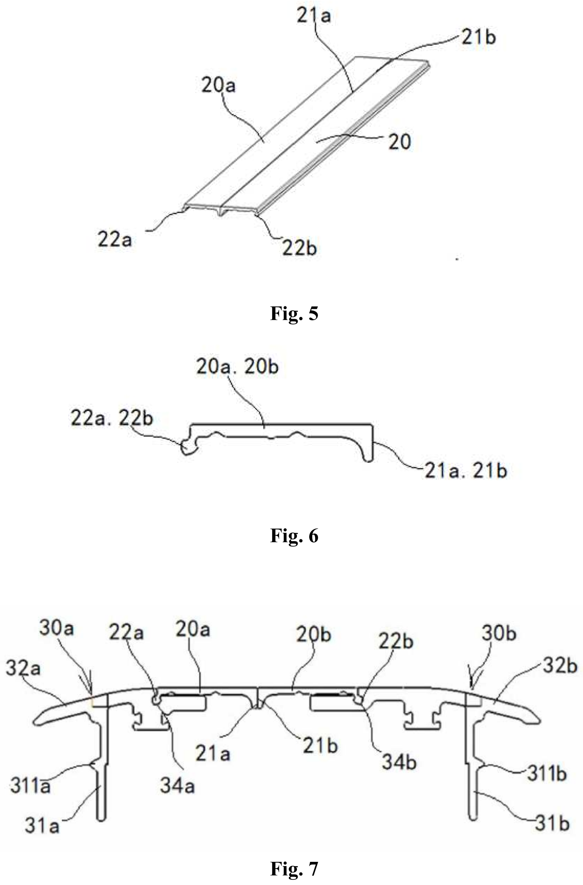

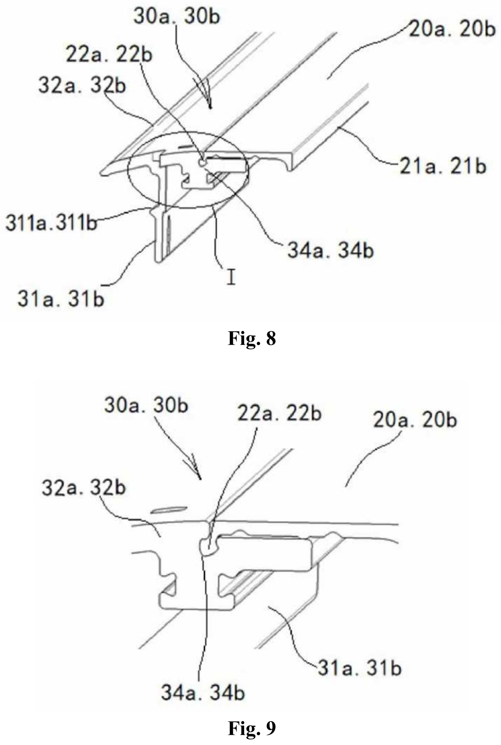

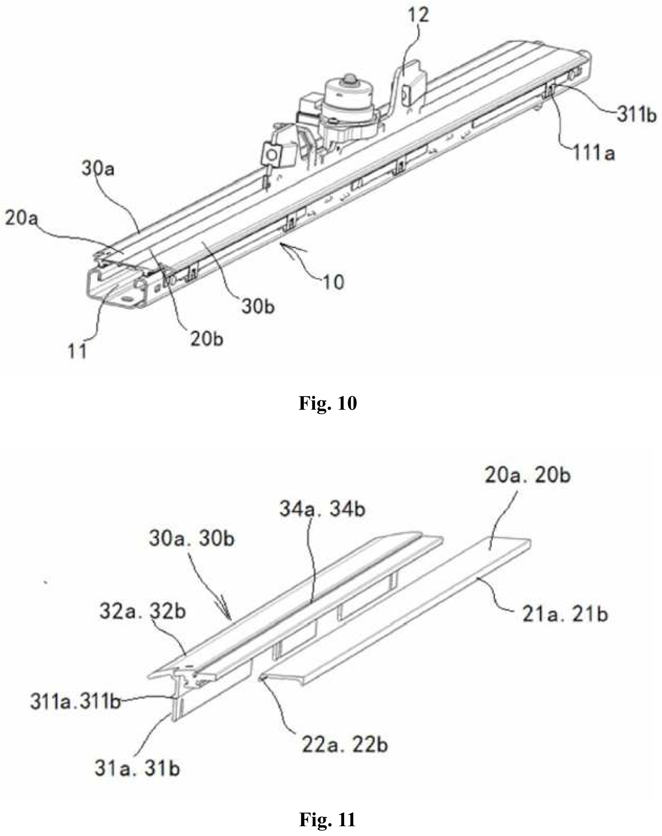

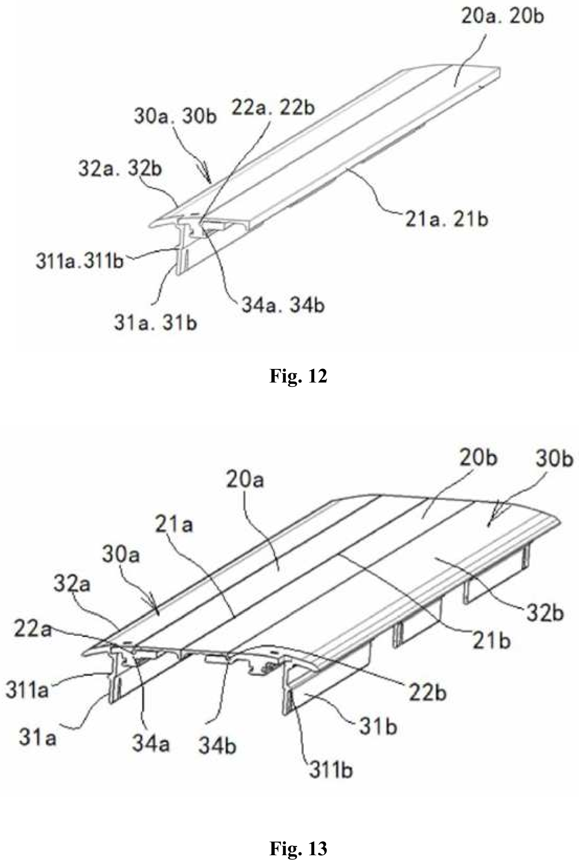

Referring to Figs. 1 to 13, the ground slide rail cover dust-proof structure shown in the figures includes a slide rail 10, a pair of decorative strips 30a, 30b, and a pair of rubber strips 20a, 20b used to cover the internal structure of the slide rail 10.

During the preparation of the rubber strips 20a, 20b, magnetic powder is added to the rubber material, wherein after the rubber vulcanization process, the opposite surfaces 21a, 21b of the rubber strips 20a, 20b have magnetic force, leaving no gaps in the closed state and preventing the intrusion of external foreign objects.

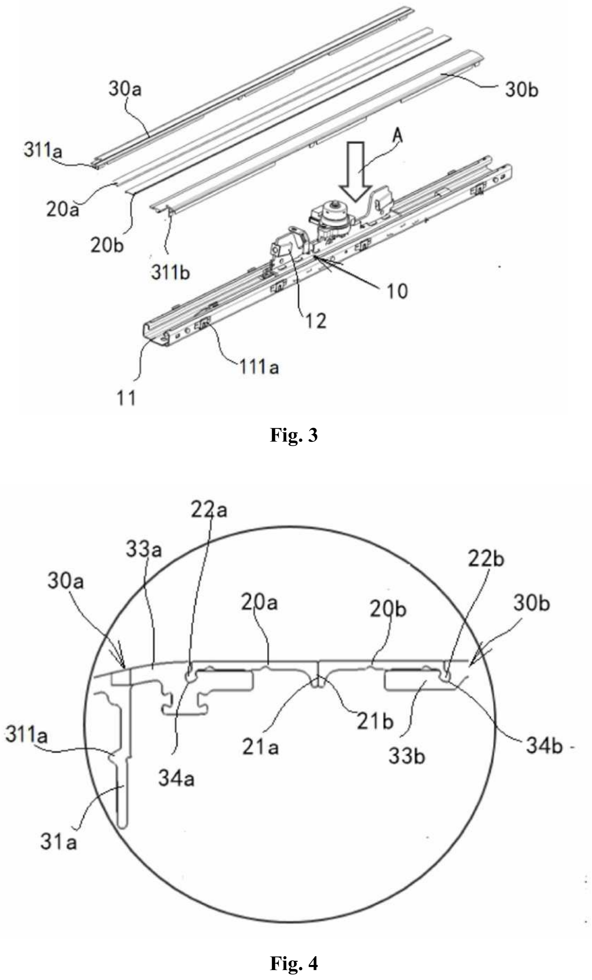

The decorative strips 30a, 30b are aluminum decorative strips. During assembly, they are snapped on the lower rail 11 of the slide rail 10 in the Z-direction as indicated by arrow A in Fig. 3. Specifically, the cross-section of the decorative strips 30a, 30b is L-shaped or T-shaped (T-shaped in this embodiment). At least one first snap 311a, 311b is provided on the vertical sides 31a, 31b of the T-shape, and at least one first snap-fit opening 111a is provided on the lower rail 11 of the slide rail 10. The first snaps 311a, 311b are snap-fitted in the first snap-fit opening 111a, so that the vertical sides 31a, 31b of the decorative strips 30a, 30b are snapped on the lower rail 11 of the slide rail 10.

At least one second snap-fit opening 34a, 34b is provided on the upper surface of the horizontal sides 32a, 32b of the T-shape, wherein at least one second snap 22a, 22b is provided on the lower surface of the rubber strips 20a, 20b. The second snaps 22a, 22b are snap-fitted in the second snap-fit openings 34a, 34b. During assembly, the rubber strips 20a, 20b are snapped on the horizontal sides 32a, 32b of the T-shape in the Z-direction as indicated by arrow A in Fig. 3, so that the pair of rubber strips 20a, 20b are arranged between the pair of decorative strips 30a, 30b. The second snap-fit openings 34a, 34b are in a peach-shaped groove structure, wherein the second snaps 22a, 22b are in a peach-shaped block structure.

Of course, in this embodiment, it is also possible to coat magnetic powder only on the opposite surfaces 21a, 21b of the pair of rubber strips 20a, 20b.

The above-mentioned decorative strips 30a, 30b and the pair of rubber strips 20a, 20b all adopt the same structure, which can save manufacturing costs.

### Embodiment 2

The difference between this embodiment and Embodiment 1 is that during the preparation of the rubber strips 20a, 20b, no magnetic powder is added to the rubber material. Instead, magnetic sheets 400a, 400b are attached to or embedded in the opposite surfaces 21a, 21b of the pair of rubber strips 20a, 20b. The magnetic sheets 400a, 400b are adhered to the opposite surfaces 21a, 21b of the pair of rubber strips 20a, 20b with glue or embedded in the opposite surfaces 21a, 21b of the pair of rubber strips 20a, 20b as inserts during the preparation of the rubber strips 20a, 20b.

### Embodiment 3

The difference between this embodiment and Embodiment 1 is that it further includes a pair of connecting pieces 500a, 500b. The connecting pieces 500a, 500b are made of cloth or plastic. If made of cloth, plastic snaps 60a, 60b (the aforementioned third snaps) are formed at the ends 51a, 51b of the pair of connecting pieces 50a, 50b that are away from each other.

The pair of connecting pieces 500a, 500b are arranged below the horizontal sides 32a, 32b of the T-shape of the decorative strips 30a, 30b and the rubber strips 20a, 20b. At least one third snap-fit opening 35a, 35b is provided on the horizontal sides 32a, 32b of the T-shape of the decorative strips 30a, 30b, wherein the plastic snaps 60a, 60b are snap-fitted in the third snap-fit openings 35a, 35b. The plastic snaps 60a, 60b are in a trapezoidal groove structure or a peach-shaped groove structure, wherein the third snap-fit openings 35a, 35b are in a peach-shaped groove structure or a peach-shaped block structure.

During the manufacture of the pair of connecting pieces 500a, 500b, magnetic powder can be filled in or impregnated into the pair of connecting pieces 500a, 500b, or magnetic powder can be coated on the opposite ends 52a, 52b of the pair of connecting pieces 500a, 500b, or magnetic sheets 400a, 400b can be attached to the opposite ends 52a, 52b of the pair of connecting pieces 500a, 500b.

The opposite ends of the pair of connecting pieces 500a, 500b can be magnetically attracted to each other, while they can also be separated under an external force. Here, different from the previous embodiments, the restoring force is mainly provided by the magnetic attraction force.

Another sub-invention point of the present disclosure is: the internal structure of the slide rail 20 is covered by two overlapping dust-proof cloths 10a, 10b (the aforementioned first dust-proof cloth and second dust-proof cloth). The dust-proof cloths 10a, 10b are installed by utilizing the intermediate gap between the decorative strips 30a, 30b and the slide rail 20, without any modification to the slide rail 20.

When the slide rail bracket 22 moves between the two overlapping dust-proof cloths 10a, 10b, the two overlapping dust-proof cloths 10a, 10b can be separated; after the slide rail bracket 22 leaves, they can return to the overlapping closed state through own elasticity of the two dust-proof cloths 10a, 10b to prevent dust, thus, a 100% closed state in the non-moving area of the slide rail 20 can be realized, thereby achieving a dust-proof effect. The present disclosure has the advantages of low cost, platformization, and easy installation. Here, the restoring force is basically provided by the high self-restoring force of the dust-proof cloths caused by their overlapping arrangement.

### Embodiment 4

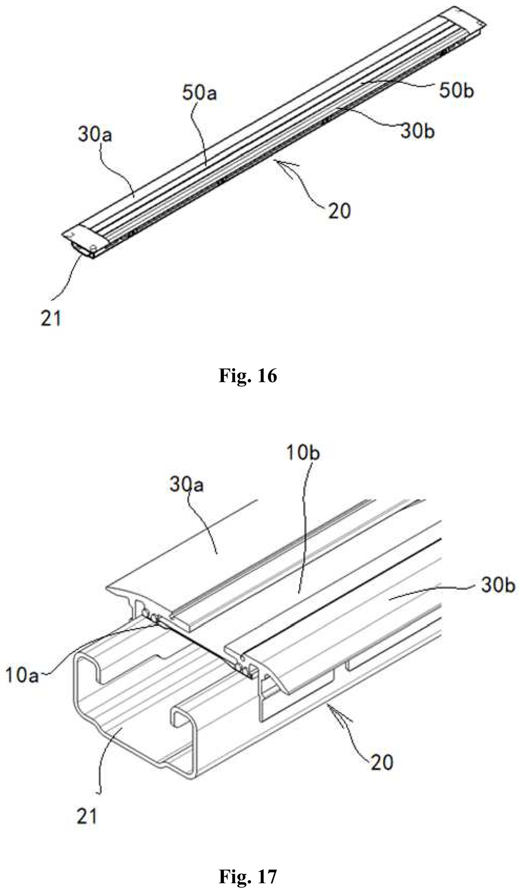

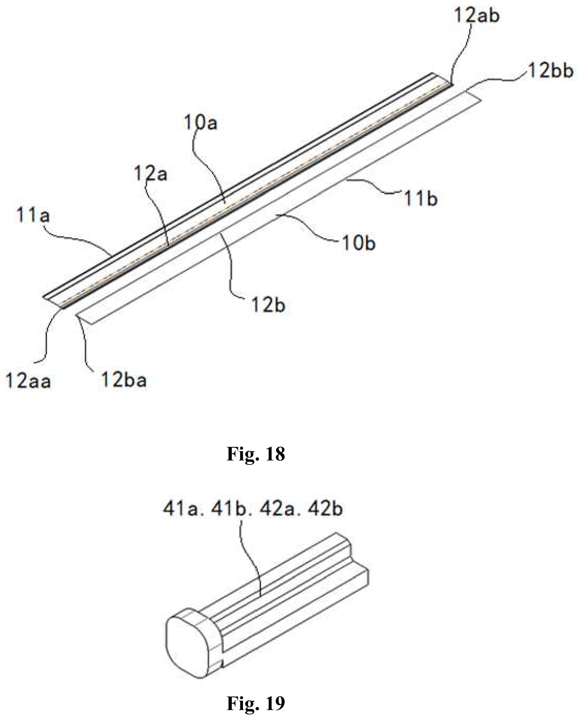

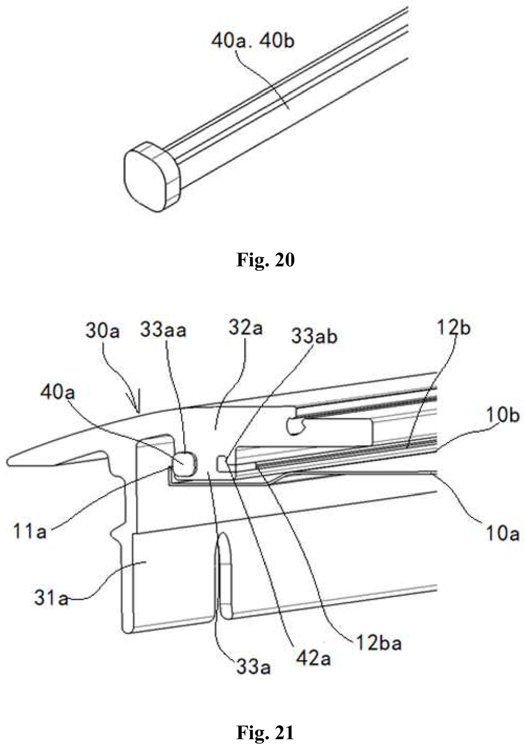

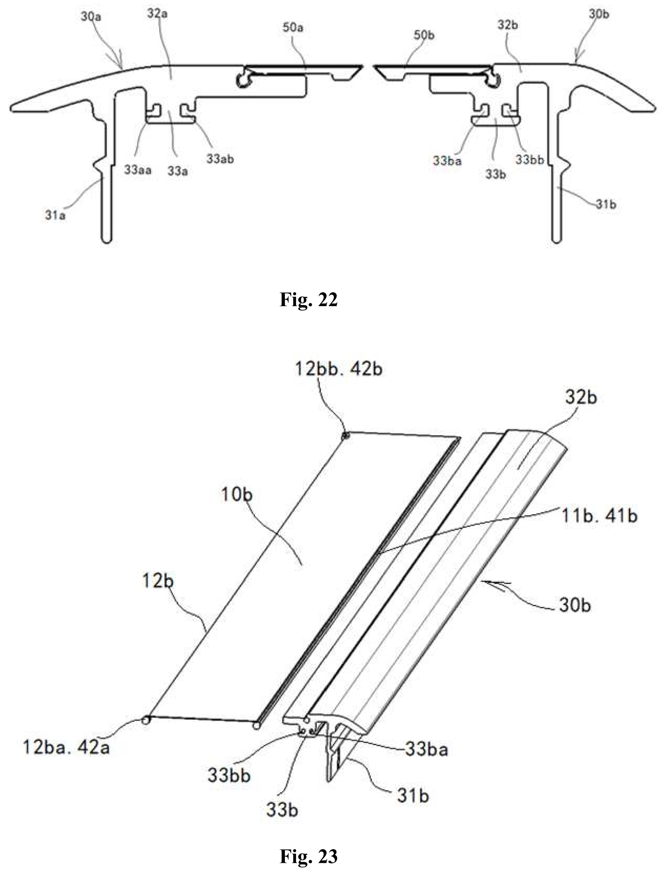

Referring to Figs. 16 to 24, the ground slide rail cover dust-proof structure shown in the figures includes a slide rail 20, decorative strips 30a (the aforementioned first decorative strip), a second decorative strip 30b (the aforementioned second decorative strip), and dust-proof cloths 10a (the aforementioned first dust-proof cloth) and 10b (the aforementioned second dust-proof cloth). Both the dust-proof cloths 10a, 10b are elastic cloths.

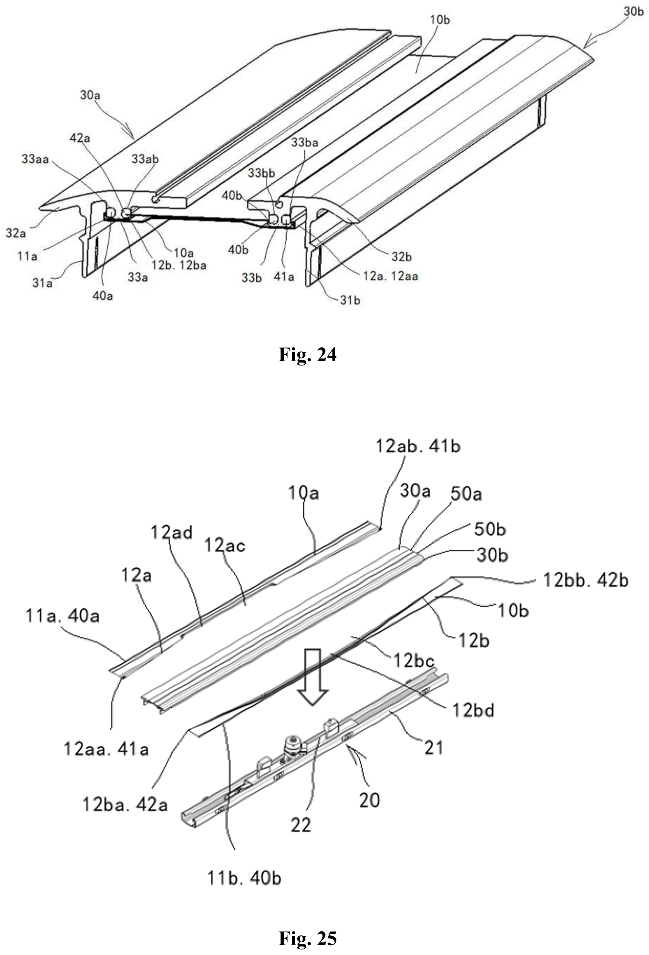

The cross-section of the decorative strips 30a, 30b is L-shaped or T-shaped. The vertical sides 31a, 31b of the L-shape or T-shape of the decorative strips 30a, 30b are snap-fitted on the snaping pieces (not shown in the figures) on the lower rail 21 of the slide rail 20. Rubber strips 50a, 50b (see Fig. 25) are also installed on the horizontal sides 32a, 32b of the L-shape or T-shape of the decorative strips 30a, 30b.

Downwardly protruding connecting part 33a (the aforementioned first connecting part) and connecting part 33b (the aforementioned second connecting part) are provided on the bottom surface of the horizontal sides 32a, 32b of the L-shape or T-shape of the decorative strips 30a, 30b. A snaping slot 33aa (the aforementioned first snaping slot) and a snaping slot 33ab (the aforementioned second snaping slot) are symmetrically provided on the two side surfaces of the connecting part 33a, wherein a snaping slot 33ba (the aforementioned third snaping slot) and a snaping slot 33bb (the aforementioned fourth snaping slot) are symmetrically provided on the two side surfaces of the connecting part 33b. The cross-sections of the snaping slots 33aa, 33ab, 33ba, and 33bb in the direction perpendicular to the length direction of the decorative strips 30a, 30b are all L-shaped.

One edge 11a of the dust-proof cloth 10a parallel to the length direction of the decorative strip 30a is snapped into the snaping slot 33aa after wrapping around the connecting part 33a, especially snapped into the snaping slot 33aa through a long snap 40a. The two corners 12aa, 12ab of the other edge 12a of the dust-proof cloth 10 parallel to the length direction of the decorative strip 30a are snapped into the head and tail positions of the snaping slot 33bb with the connecting part 33b wrapped around, especially snapped into the head and tail positions of the snaping slot 33ba through a short snap 41a, 41b (the aforementioned first short snaps) respectively.

One edge 11b of the dust-proof cloth 10b parallel to the length direction of the decorative strip 30b is snapped into the snaping slot 33ba, especially snapped into the snaping slot 33bb through a long snap 40b. The two corners 12ba, 12bb of the other edge 12b of the dust-proof cloth 10b parallel to the length direction of the decorative strip 30b are snapped into the snaping slot 33ab, especially snapped into the head and tail positions of the snaping slot 33ab through a short snap 42a, 42b (the aforementioned second short snaps) respectively.

Embodiment 4 can also be modified as follows:
The middle part of the other edge 12a of the dust-proof cloth 10a parallel to the length direction of the decorative strip 30a is snapped into the middle position of the snaping slot 33ab, especially an intermediate snap (not shown in the figure) is snapped into the middle position of the snaping slot 33ab. The middle part of the other edge 12b of the dust-proof cloth 10b parallel to the length direction of the decorative strip 30b is snapped into the middle position of the snaping slot 33ba, especially an intermediate snap (not shown in the figure) is snapped into the middle position of the snaping slot 33ba.

The slide rail bracket 22 in the slide rail 20 moves back and forth between the dust-proof cloth 10a and the dust-proof cloth 10b. When the slide rail bracket 22 moves, the dust-proof cloth 10a and the dust-proof cloth 10b will be spread open, while the areas of the dust-proof cloth 10a and the dust-proof cloth 10b that are not spread open will overlap due to elastic tension, shielding the lead screw and preventing particles from entering.

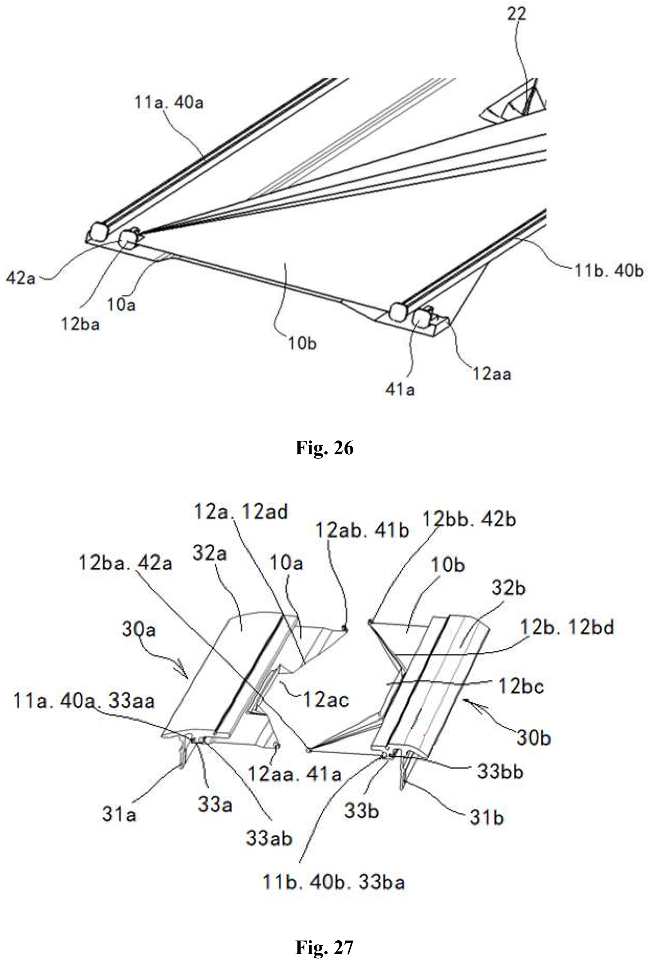

Referring to Figs. 25 to 28, when the slide rail bracket 22 in the slide rail 20 moves back and forth between the dust-proof cloth 10a and the dust-proof cloth 10b, a gap 12ac (the aforementioned first gap) will be formed between the two corners 12aa, 12ab of the other edge 12a of the dust-proof cloth 10a parallel to the length direction of the decorative strip 30a; another gap 12bc (the aforementioned second gap) will be formed between the two corners 12ba, 12bb of the other edge 12b of the dust-proof cloth 10b parallel to the length direction of the decorative strip 30b.

Both the gap 12ac and the gap 12bc are trapezoidal gaps, wherein their projections in the vertical direction partially overlap. In addition, upwardly protruding flanges 12ad, 12bd will be formed at the edges of the gap 12ac and the gap 12bc, so that foreign objects on the dust-proof cloths 10a, 10b will not fall into the slide rail 20 from the gap 12ac and the gap 12bc.

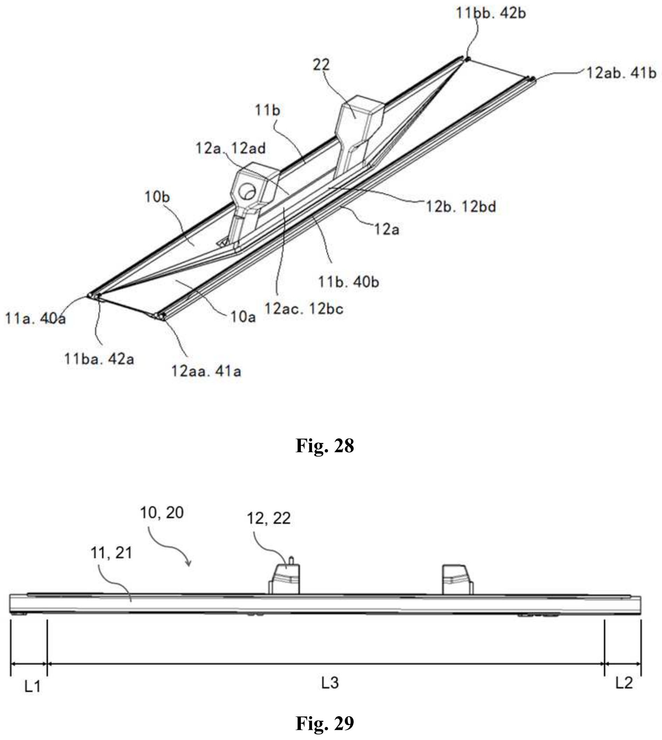

As shown in Fig. 29, the covering structure has non-working areas L1, L2 at both ends of the ground slide rail cover dust-proof structure (especially the slide rail 20) and a working area L3 between the non-working areas L1, L2. The working area is also called the effective stroke section. The slide rail brackets 12, 22 can slide within the range of the working area L3. The non-working areas L1, L2 are non-moving areas, wherein the slide rail brackets 12, 22 will not enter these non-moving areas during operation, so that the covering structure can maintain a resettable state during the movement of the slide rail brackets 12, 22. The length of the non-working area can account for 5% of the total length of the covering structure, for example.

## Claims

1. A ground slide rail cover dust-proof structure, comprising a covering structure, **characterized in that** the covering structure is configured such that when a slide rail bracket passes through the covering structure, the covering structure is spread open by the passing of the slide rail bracket; when the slide rail bracket leaves, the covering structure returns to a closed state due to a restoring force, thereby achieving a dust-proof effect.

2. The ground slide rail cover dust-proof structure according to claim 1, **characterized in that** the covering structure is configured as a pair of rubber strips installed on the slide rail to cover the internal structure of the slide rail, wherein the opposite surfaces of the pair of rubber strips can be magnetically attracted to each other, while they can also be separated under an external force, wherein magnetic powder is filled in the rubber strips during their preparation to make the rubber strips magnetic; or wherein magnetic powder is coated on the opposite surfaces of the pair of rubber strips; or wherein magnetic sheets are attached to or embedded in the opposite surfaces of the pair of rubber strips.

3. The ground slide rail cover dust-proof structure according to claim 2, **characterized in that** the ground slide rail cover dust-proof structure further comprises a pair of decorative strips, wherein the pair of decorative strips are installed on the slide rail, wherein the pair of rubber strips are arranged between the pair of decorative strips.

4. The ground slide rail cover dust-proof structure according to claim 3, **characterized in that** the decorative strips are snapped on the lower rail of the slide rail.

5. The ground slide rail cover dust-proof structure according to claim 4, **characterized in that** the cross-section of the decorative strip is L-shaped or T-shaped, wherein the vertical side of the L-shape or T-shape is snapped on the lower rail of the slide rail, wherein the rubber strip is snapped on the horizontal side of the L-shape or T-shape.

6. The ground slide rail cover dust-proof structure according to claim 5, **characterized in that** at least one first snap is provided on the vertical side of the L-shape or T-shape, wherein at least one first snap-fit opening is provided on the lower rail of the slide rail, wherein the first snap is snap-fitted in the first snap-fit opening.

7. The ground slide rail cover dust-proof structure according to claim 6, **characterized in that** at least one second snap-fit opening is provided on the horizontal side of the L-shape or T-shape, wherein at least one second snap is provided on the rubber strip, wherein the second snap is snap-fitted in the second snap-fit opening.

8. The ground slide rail cover dust-proof structure according to claim 1, **characterized in that** the ground slide rail cover dust-proof structure comprises a slide rail, wherein the covering structure is configured as a pair of connecting pieces, wherein the ends of the pair of connecting pieces that are away from each other are installed on the slide rail to cover the internal structure of the slide rail, wherein the opposite ends of the pair of connecting pieces can be magnetically attracted to each other, while they can also be separated under an external force.

9. The ground slide rail cover dust-proof structure according to claim 8, **characterized in that** it further comprises a pair of decorative strips, wherein the pair of decorative strips are installed on the slide rail, wherein the ends of the pair of connecting pieces that are away from each other are respectively installed on the pair of decorative strips and located below the pair of decorative strips.

10. The ground slide rail cover dust-proof structure according to claim 9, **characterized in that** each of the pair of connecting pieces is L-shaped or T-shaped, wherein the vertical sides of the L-shaped or T-shaped connecting pieces are snapped on the lower rail of the slide rail, wherein the ends of the pair of connecting pieces that are away from each other are snapped on the horizontal sides of the L-shape or T-shape of the decorative strips.

11. The ground slide rail cover dust-proof structure according to claim 10, **characterized in that** at least one third snap is provided at the ends of the pair of connecting pieces that are away from each other, wherein at least one third snap-fit opening is provided on the horizontal side of the L-shaped or T-shaped decorative strip, wherein the third snap is snap-fitted in the third snap-fit opening.

12. The ground slide rail cover dust-proof structure according to any one of claims 9 to 11, **characterized in that** magnetic powder is coated on the opposite ends of the pair of connecting pieces, or wherein magnetic sheets are attached to the opposite ends of the pair of connecting pieces, or wherein magnetic powder is filled in the connecting pieces during their manufacture.

13. The ground slide rail cover dust-proof structure according to claim 12, **characterized in that** the connecting pieces are made of cloth, wherein the third snap is plastic snap formed on the cloth.

14. The ground slide rail cover dust-proof structure according to claim 1, **characterized in that** the ground slide rail cover dust-proof structure comprises a slide rail and a first decorative strip and a second decorative strip installed on the slide rail, wherein the covering structure is configured as a first dust-proof cloth and a second dust-proof cloth which are overlapped and respectively installed on the first decorative strip and the second decorative strip, wherein the slide rail bracket in the slide rail moves back and forth between the first dust-proof cloth and the second dust-proof cloth.

15. The ground slide rail cover dust-proof structure according to claim 14, **characterized in that** one edge of the first dust-proof cloth parallel to the length direction of the first decorative strip is snapped into the first decorative strip, wherein the other edge of the first dust-proof cloth parallel to the length direction of the first decorative strip is snapped into the second decorative strip, wherein one edge of the second dust-proof cloth parallel to the length direction of the second decorative strip is snapped into the second decorative strip, wherein the other edge of the second dust-proof cloth parallel to the length direction of the second decorative strip is snapped into the first decorative strip.

16. The ground slide rail cover dust-proof structure according to claim 15, **characterized in that** the two corners of the other edge of the first dust-proof cloth parallel to the length direction of the first decorative strip are snapped into the first decorative strip, wherein the two corners of the other edge of the second dust-proof cloth parallel to the length direction of the first decorative strip are snapped into the second decorative strip.

17. The ground slide rail cover dust-proof structure according to claim 15, **characterized in that** a first connecting part and a second connecting part are provided on the first decorative strip and the second decorative strip, wherein a first snaping slot and a second snaping slot are respectively provided on the two side surfaces of the first connecting part, wherein a third snaping slot and a fourth snaping slot are respectively provided on the two side surfaces of the second connecting part, wherein one edge of the first dust-proof cloth parallel to the length direction of the first decorative strip is snapped into the first snaping slot, wherein the other edge of the first dust-proof cloth parallel to the length direction of the first decorative strip is snapped into the third snaping slot, wherein one edge of the second dust-proof cloth parallel to the length direction of the second decorative strip is snapped into the fourth snaping slot, wherein the other edge of the second dust-proof cloth parallel to the length direction of the second decorative strip is snapped into the second snaping slot.

18. The ground slide rail cover dust-proof structure according to claim 17, **characterized in that** the first snaping slot and the second snaping slot are symmetrically arranged on the two side surfaces of the first connecting part, wherein the third snaping slot and the fourth snaping slot are symmetrically arranged on the two side surfaces of the second connecting part.

19. The ground slide rail cover dust-proof structure according to claim 17, **characterized in that** the first snaping slot and the second snaping slot are both L-shaped in the direction perpendicular to the length direction of the first decorative strip, wherein the third snaping slot and the fourth snaping slot are both L-shaped in the direction perpendicular to the length direction of the second decorative strip.

20. The ground slide rail cover dust-proof structure according to claim 17, **characterized in that** one edge of the first dust-proof cloth parallel to the length direction of the first decorative strip is snapped into the first snaping slot through a first long snap, wherein one edge of the second dust-proof cloth parallel to the length direction of the second decorative strip is snapped into the fourth snaping slot through a second long snap.

21. The ground slide rail cover dust-proof structure according to claim 17, **characterized in that** the two corners of the other edge of the first dust-proof cloth parallel to the length direction of the first decorative strip are snapped into the third snaping slot, wherein the two corners of the other edge of the second dust-proof cloth parallel to the length direction of the first decorative strip are snapped into the second snaping slot.

22. The ground slide rail cover dust-proof structure according to claim 17, **characterized in that** the two corners of the other edge of the first dust-proof cloth parallel to the length direction of the first decorative strip are respectively snapped into the third snaping slot through two first short snaps, wherein the two corners of the other edge of the second dust-proof cloth parallel to the length direction of the second decorative strip are respectively snapped into the second snaping slot through two second short snaps.

23. The ground slide rail cover dust-proof structure according to any one of claims 14 to 22, **characterized in that** both the first dust-proof cloth and the second dust-proof cloth are elastic cloths, wherein at the position where the slide rail bracket leaves, the first dust-proof cloth and the second dust-proof cloth are closed by their own elasticity, so as to achieve the dust-proof purpose.

24. The ground slide rail cover dust-proof structure according to claim 1, **characterized in that** the covering structure has non-working areas at both ends of the ground slide rail cover dust-proof structure and a working area between the non-working areas, wherein the slide rail bracket can slide within the range of the working area, wherein the length of the non-working area accounts for at least 5% of the total length of the covering structure.
